(19) Europäisches Patentamt
European Patent Office
Office européen des brevets

(11) EP 1 144 346 B1

(12) **FASCICULE DE BREVET EUROPEEN**

(45) Date de publication et mention de la délivrance du brevet:
**25.02.2004 Bulletin 2004/09**

(21) Numéro de dépôt: **99961147.8**

(22) Date de dépôt: **22.12.1999**

(51) Int Cl.[7]: **C07B 61/02**

(86) Numéro de dépôt international:
**PCT/FR1999/003255**

(87) Numéro de publication internationale:
**WO 2000/040526 (13.07.2000 Gazette 2000/28)**

(54) **PROCEDE DE PREPARATION DE RADICAUX NITROXYDE BETA-PHOSPHORES**

VERFAHREN ZUR HERSTELLUNG VON BETA-PHOSPHORIERTEN NITROXID-RADIKALEN

METHOD FOR PREPARING BETA-PHOSPHOROUS NITROXIDE RADICALS

(84) Etats contractants désignés:
**AT BE CH CY DE DK ES FI FR GB GR IE IT LI LU MC NL PT SE**

(30) Priorité: **08.01.1999 FR 9900127**

(43) Date de publication de la demande:
**17.10.2001 Bulletin 2001/42**

(73) Titulaire: **Atofina**
**92800 Puteaux (FR)**

(72) Inventeurs:
- **GILLET, Jean-Philippe**
  **F-69530 Brignais (FR)**
- **GUERRET, Olivier**
  **F-69280 Marcy l'Etoile (FR)**
- **TORDO, Paul**
  **F-13004 Marseille (FR)**

(56) Documents cités:

| | |
|---|---|
| **WO-A-96/24620** | **WO-A-96/26205** |
| **US-A- 5 087 752** | **US-A- 5 218 116** |

- **GRIMALDI S ET AL: "Synthesis and applications to living free radical polymerization of a new class of nitroxyl radicals" , POLYM. PREPR. (AM. CHEM. SOC., DIV. POLYM. CHEM.) (ACPPAY,00323934);1997; VOL.38 (1); PP.651-652 , UNIVERSITE AIX-MARSEILLE I;LAB. STRUCTURE REACTIVITE; MARSEILLE; 13397; FR. (FR) XP002116564 le document en entier**
- **LE MERCIER C ET AL: "Synthesis of nitroxides and alkoxyamines used in controlled/"living" radical polymerization" POLYM. PREPR. (AM. CHEM. SOC., DIV. POLYM. CHEM.) (ACPPAY,00323934);1999; VOL.40 (2); PP.403-404, - août 1999 (1999-08) XP000901737 CNRS et Universites d'Aix-Marseille I et III;Laboratoire Structure et Reactivite des Especes Paramagnetiques; Marseille; 13397; Fr. (FR)**

Remarques:
L'OMPI données de publication A3 ne sont pas actuellement disponibles.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 144 346 B1

Printed by Jouve, 75001 PARIS (FR)

## Description

La présente invention a pour objet un procédé de préparation de radicaux nitroxyde β-phosphorés de formule :

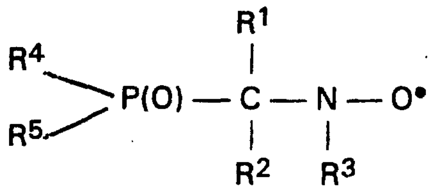

(I)

dans laquelle $R^1$, $R^2$, $R^3$, $R^4$ et $R^5$ seront définis ultérieurement. Ces composés sont utilisés notamment comme régulateurs de polymérisation radicalaire.

Ces composés peuvent être obtenus notamment par oxydation des N-alkylaminophosphonates de formule :

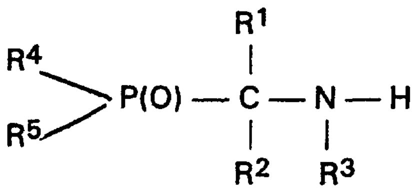

(II)

Les N-alkylaminophosphonates (II) peuvent être obtenus de façon connue en faisant réagir un composé carbonylé $R^1R^2C(O)$, une amine primaire $R^3NH_2$ et un composé phosphoré $HP(O)R^4R^5$ ayant un hydrogène mobile selon une réaction type de Mannich :

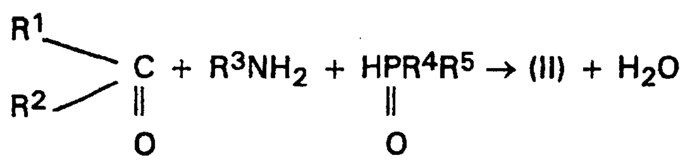

Il est décrit dans la demande de brevet internationale WO 96/24620 un procédé qui consiste à faire réagir dans une première étape un composé carbonylé $R^1$ $R^2C(O)$ avec une amine primaire $R^3NH_2$ selon un rapport molaire composé carbonylé/amine primaire sensiblement égal à 1, puis dans une seconde étape à ajouter au composé obtenu dans la première étape un composé phosphoré $HP(O)R^4R^5$ selon un rapport molaire composé phosphoré/produit obtenu dans la première étape allant de 1,5 à 2,5, voire plus. Cette façon de procéder présente plusieurs inconvénients.

Ainsi, l'eau formée dans la première étape lors de la réaction du composé carbonylé avec l'amine primaire qui conduit à la formation d'imine selon le schéma :

$$> C = O + -NH_2 \rightarrow > C = N- + H_2O$$

n'est pas éliminée avant l'addition du composé phosphoré, ce qui peut être de nature à entraîner une éventuelle hydrolyse dudit composé phosphoré, notamment lorsque ce dernier est un phosphite.

En outre, l'utilisation d'un très grand excès de composé phosphoré (150 % à 250 %, voire plus) par rapport au composé obtenu dans la première étape (imine), est rédhibitoire pour un procédé industriel.

De plus, cet excès, outre le fait des difficultés à l'éliminer, est de nature à générer de nombreuses impuretés par réaction avec, notamment, le composé carbonylé non transformé pour conduire à des hydroxyphosphonates (>C(OH)-P(O)<) dans le cas où le composé phosphoré utilisé est un phosphite. Cet excès de composé phosphoré peut également entraîner la formation de produits lourds résultant de la réaction entre (II), le composé carbonylé et le composé phosphoré $HP(O)R^4R^5$ en excès.

Toutes ces impuretés susceptibles d'être présentes dans le produit brut (II) rendent difficile la purification du N-alkylaminophosphonate (II) et; par conséquent, son utilisation ultérieure.

Le nitroxyde β-phosphoré (I) peut être obtenu par oxydation du N-alkylaminophosphonate (II) en remplaçant l'hydrogène de >N-H par un atome d'oxygène.

Cette oxydation peut être réalisée selon différentes techniques connues de l'homme du métier. On liste ci-après, de façon non-exhaustive quelques techniques appropriées :

- ♦ réaction d'une amine secondaire avec l'eau oxygénée en présence d'un catalyseur solide (titano-silicalite) dont le principe est décrit dans le brevet US 5,218,116 ;
- ♦ réaction d'une amine secondaire avec un dioxirane ou ses précurseurs carbonylés associés à l'oxone® dont la technique est décrite dans le brevet US 5,087,752,
- ♦ réaction d'une amine secondaire avec l'acide métachloroperbenzoïque selon un protocole décrit dans Journal of American Chemical Society, 1967, 89 (12) pages 3055-3056.

Selon la demande internationale WO 96/24620, le 2,2-diméthyl-1-(1,1-diméthyléthylamino)propyl phosphonate de diéthyle n'a pu être oxydé efficacement qu'au moyen de l'acide métachloroperbenzoïque (mCPBA) selon un protocole qui consiste à introduire le mCPBA en solution dans $CH_2Cl_2$, dans une solution de $CH_2Cl_2$ de l'aminophosphonate mentionné ci-dessus. Le nitroxyde β-phosphoré obtenu est purifié par passage sur une colonne de gel de silice, ce qui implique l'utilisation d'un grand volume de solvant d'élution.

Cette façon d'opérer ne peut s'appliquer qu'à la préparation de faibles quantités de (I). En outre, l'analyse de ce produit par HPLC a montré que cette technique conduisait à des nitroxydes dont la pureté était inférieure à 80 %.

Afin d'améliorer le procédé d'oxydation de l'aminophosphonate (II) par le mCPBA, la demanderesse a effectué le séchage préalable du mCPBA technique d'une part, et optimisé le rapport molaire mCPBA / aminophosphonate, d'autre part.

Bien qu'obtenant un rendement satisfaisant en nitroxyde β-phosphoré, cette façon d'opérer entraîne des quantités d'effluents (sel d'acide métachlorobenzoïque) difficiles à éliminer.

De plus, l'emploi du mCPBA même optimisé ne permet pas une transposition viable à l'échelle industrielle.

La demanderesse a trouvé qu'en utilisant des peracides organiques non halogénés, en milieu biphasique eau/solvant organique avec une phase aqueuse tamponée à un pH allant de 5 à 12, elle pouvait oxyder les aminophosphonates (II) en nitroxyde-β-phosphorés (I) tout en réduisant significativement les coûts de fabrication et en générant des effluents facilement éliminables.

La présente invention a donc pour objet un procédé de fabrication de composés de formule générale :

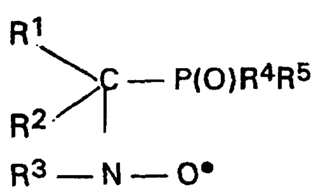

(I)

dans laquelle $R^1$ et $R^2$, identiques ou différents, représentent un atome d'hydrogène, un radical alkyle linéaire, ramifié ou cyclique ayant un nombre d'atomes de carbone allant de 1 à 10, un radical aryle, un radical aralkyle ayant un nombre d'atomes de carbone allant de 1 à 10, ou bien $R^1$ et $R^2$ sont reliés entre eux de façon à former un cycle incluant l'atome de carbone portant lesdits $R^1$ et $R^2$, ledit cycle ayant un nombre d'atomes de carbone, incluant le carbone porteur des radicaux $R^1$ et $R^2$, allant de 3 à 8 ; $R^3$ représente un radical hydrocarboné, linéaire ou ramifié, saturé ou insaturé, pouvant comprendre au moins un cycle, ledit radical ayant un nombre d'atomes de carbone allant de 1 à 30 ; $R^4$ et $R^5$, identiques ou différents, représentent un radical alkyle, linéaire ou ramifié, ayant un nombre d'atomes de carbone allant de 1 à 20, un radical cycloalkyle, aryle, alkoxyle, aryloxyle, aralkyloxyle, perfluoroalkyle, aralkyle, dialkyl- ou diarylamino, alkylarylamino, thioalkyle, ou bien $R^4$ et $R^5$ sont reliés entre eux de façon à former un cycle incluant l'atome de phosphore, ledit hétérocycle ayant un nombre d'atomes de carbone allant de 2 à 4 et pouvant contenir en outre 1 ou plusieurs atomes d'oxygène, de soufre ou d'azote ;

ledit procédé consistant à oxyder un aminophoshonate de formule

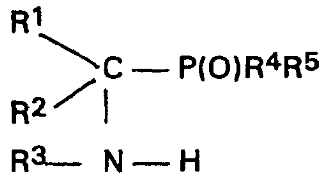

(II)

obtenu par réaction d'un composé carbonylé $R^1R^2C(O)$, d'une amine primaire $R^3NH_2$ et d'un composé phosphoré HP (O)$R^4R^5$, $R^1$, $R^2$, $R^3$, $R^4$ et $R^5$ ayant les significations précédemment données ; ledit procédé étant caractérisé en ce qu'il consiste d'abord à préparer et éventuellement à isoler le composé II, puis ensuite à l'oxyder en effectuant les étapes (successives) suivantes :

a) on fait réagir un composé carbonylé $R^1R^2C(O)$ avec une amine primaire $R^3NH_2$ selon un rapport molaire $R^1R^2C$ (O) / $R^3NH_2$ compris entre 0,8 et 1,5 et, de préférence, compris entre 0,9 et 1,1 à une température comprise entre 0°C et 120°C, à une pression allant de 1 à 10 bars ; puis on élimine l'eau formée du milieu réactionnel ;
b) on fait réagir le composé obtenu en a) avec un composé phosphoré $HP(O)R^4R^5$ utilisé selon un rapport molaire $HP(O)R^4R^5$ / composé a) au plus égal à 1,5, et, de préférence, compris entre 1 et 1,5, à une température comprise entre 0°C et 120°C ;
c) on effectue un traitement acide du milieu réactionnel obtenu en b), on ajoute ensuite un solvant organique, on décante, on récupère la phase aqueuse puis on effectue un traitement basique de ladite phase aqueuse ;
d) on extrait l'aminophosphonate au moyen d'un solvant organique identique à celui utilisé précédemment en c) ;
e) puis, on élimine totalement ledit solvant, et on isole ledit aminophosphonate (II) qui est oxydé en nitroxyde-β-phosphoré selon les étapes suivantes :

a1/ on solubilise l'aminophosphonate (II) obtenu en e) avec un solvant organique non miscible à l'eau, puis ;
b1/ ensuite, on ajoute simultanément et sous forte agitation au milieu ainsi obtenu, une quantité de peracide organique non halogéné selon un rapport molaire peracide/aminophosphonate (II) allant de 1,5 à 2,5 et une quantité suffisante d'une solution aqueuse basique d'un carbonate ou d'un hydrogénocarbonate d'un métal alcalin ou d'un métal alcalinoterreux ou bien encore d'une solution ammoniacale pour obtenir un pH allant de 5 à 12, et de préférence, allant de 6 à 9, à une température comprise entre -10°C et +40°C et, de préférence comprise entre -5°C et +30°C, jusqu'à conversion complète de l'aminophosphonate (II) ;
c1/ puis on récupère la phase organique par simple décantation, et on isole le nitroxyde β-phosphoré par évaporation du solvant organique sous pression réduite.

La pureté du nitroxyde β-phosphoré obtenu peut être améliorée par flash distillation sous pression réduite ou par cristallisation à basse température.
Selon une variante du procédé de la présente invention, on peut ne pas isoler l'aminophosphonate (II) et effectuer l'oxydation sur la phase aqueuse obtenue en c), laquelle contient le chlorhydrate d'aminophosphonate.
Dans cette éventualité, on opère donc de la façon suivante :

- après avoir effectué le traitement acide du milieu réactionnel obtenu en b), puis ajouté un solvant organique non miscible à l'eau, on décante la phase aqueuse à laquelle on ajoute un solvant organique puis on effectue les étapes b1/et c1/ telles que décrites précédemment.

A titre d'illustration de composés carbonylés $R^1R^2C(O)$ utilisables selon la présente invention, on citera le triméthylacétatdéhyde (pivalaldéhyde), l'isobutyraldéhyde, le cyclohexanecarboxyaldéhyde, la diéthylcétone, la dibutylcétone, la méthyléthylcétone, la cyclohexanone, la 4-tertiobutylcyclohexanone, l'α-tetralone.
A titre d'illustration d'amines primaires $R^3$-$NH_2$ utilisables selon la présente invention, on citera la méthylamine, l'éthylamine, la propylamine, l'isopropylamine, la tertiobutylamine, la diphénylméthylamine, la triphénylméthylamine, l'aniline, l'α-naphtylamine, la benzylamine, la 1-phényléthylamine, la cyclohexylamine, la cyclopentylamine.
De préférence, on utilisera la tertiobutylamine, l'isopropylamine, la diphénylméthylamine, la 1-phényléthylamine ou la cyclohexylamine.
La réaction entre le composé carbonylé $R^1R^2C(O)$ et l'amine $R^3NH_2$ (étape a) s'effectue sous forte agitation à une température comprise entre 0°C et 120°C et, de préférence, à une température comprise entre 0°C et 60°C. On opère généralement à une pression comprise entre 1 bar et 10 bars, de préférence à pression atmosphérique et sous atmosphère de gaz inerte tel que l'azote ou l'argon. La durée de réaction peut varier dans une large mesure. Elle

est fonction de la réactivité de l'amine mise en oeuvre. La conversion totale du composé carbonylé $R^1R^2C(O)$ peut être vérifiée par analyse chromatographique (CPV).

La réaction terminée, on arrête l'agitation et on laisse décanter le milieu réactionnel. Généralement, la décantation est rapide. On élimine ensuite la phase aqueuse constituée en quasi totalité par l'eau formée lors de la réaction entre le composé carbonylé et l'amine primaire qui conduit à l'imine (III) selon le schéma :

$$R^1R^2C(O) + R^3NH_2 \xrightarrow{-H_2O} R^1R^2C = NR^3$$

(III)

On peut parfaire l'élimination de l'eau par addition d'un agent déshydratant tel qu'un tamis moléculaire à la phase décantée, ou bien encore effectuer une distillation azéotropique.

On fait réagir l'imine (III) obtenue dans l'étape a) avec un composé $HP(O)R^4R^5$ (étape b)).

A titre d'illustration de composés phosphorés $HP(O)R^4R^5$ utilisables selon la présente invention, on citera le phosphite de diméthyle, le phosphite de diéthyle, le phosphite de n-propyle, le phosphite de dibenzyle, le phosphite de diisopropyle, le phosphite de di-n-dodécyle, la diphénylphosphine oxyde, la dibenzylphosphine oxyde.

La réaction entre le composé phosphoré $HP(O)R^4R^5$ et l'imine (III) obtenue dans l'étape a), s'effectue sous forte agitation, à une température comprise entre 0°C et 120°C et, de préférence, à une température comprise entre 10°C et 80°C. On opère, comme dans l'étape a), sous atmosphère de gaz inerte et, de préférence, à pression atmosphérique.

On utilise un excès molaire de composé phosphoré $HP(O)R^4R^5$ par rapport à l'imine obtenue dans l'étape a) au plus égal à 50 % et, de préférence, un excès le plus faible possible voire nul (rapport molaire composé phosphoré / imine (III) égal à 1).

Le milieu réactionnel est maintenu sous agitation pendant une durée qui peut varier dans une large mesure, de préférence, cette durée est au plus égale à 25 heures.

Le milieu réactionnel est ensuite acidifié (étape c)) avec une solution aqueuse d'acide chlorhydrique.

La concentration pondérale en HCl est au plus égale à 20 % et, de préférence, comprise entre 5 % et 15 %. Cette acidification est de préférence effectuée à une température comprise entre 0°C et 20 °C et, de préférence, à une température voisine de 10°C.

Lorsque le pH du milieu réactionnel est inférieur à 3, on effectue une première extraction qui consiste à éliminer les impuretés organiques et réactifs non transformés avec un solvant organique qui est un bon solvant des impuretés. On utilisera avantageusement le chlorure de méthylène ($CH_2Cl_2$).

Ensuite, on décante la phase aqueuse acide (contenant le chlorhydrate d'aminophosphonate) laquelle subit un traitement basique.

De préférence, cette phase aqueuse acide est traitée avec une solution aqueuse de carbonate ou d'hydrogénocarbonate d'un métal alcalin tel que $K_2CO_3$, $NaHCO_3$, $KHCO_3$, $Na_2CO_3$ ou avec une solution ammoniacale.

On effectue ensuite une seconde extraction (étape d)) de l'aminophosphonate (II) relargué avec le même solvant utilisé dans l'étape c).

La phase organique est avantageusement lavée avec de l'eau pure puis concentrée sous pression réduite.

On obtient un aminophosphonate (II) quasiment pur.

L'oxydation de l'aminophosphonate (II) en nitroxyde (I) est réalisée selon les étapes $a^1$/ à $c^1$/ telles que décrites précédemment.

A titre d'illustration de solvants organiques utilisables selon la présente invention dans les étapes $a^1$/ à $c^1$/, on citera les hydrocarbures aliphatiques tels que le pentane, l'heptane, le cyclohexane ; les solvants chlorés tels que le $CH_2Cl_2$ ; les esters d'acides aliphatiques tels que l'acétate d'éthyle, le propionate d'éthyle, ou un mélange d'au moins deux des solvants précités.

A titre d'illustration de peracides organiques non halogénés utilisables selon la présente invention, on citera l'acide peracétique, l'acide perpropionique, l'acide perbutanoïque.

Les composés (I) peuvent être identifiés par analyse élémentaire, HPLC, IR et RPE.

Les composés (II) obtenus selon l'invention peuvent être identifiés par RMN du proton, du $^{13}C$ et du $^{31}P$, par IR et par analyse élémentaire.

Les composés obtenus selon le procédé de la présente invention sont d'une pureté suffisante pour être utilisés comme régulateurs des polymérisations radicalaires.

Le procédé selon la présente invention présente l'avantage de conduire à des rendements élevés en radicaux nitroxyde β-phosphorés.

Les exemples qui suivent illustrent l'invention.

## EXEMPLE 1

### PREPARATION DU 2,2-DIMETHYL-1-(1,1-DIMETHYLETHYLAMINO)PROPYL PHOSPHONATE DE DIETHYLE PRECURSEUR DU N-TERTIOBUTYL-1-DIETHYLPHOSPHONO-2,2-DIMETHYL PROPYL NITROXYDE :

Dans un réacteur Schott de 2,5 l équipé d'une ancre d'agitation, d'une ampoule de coulée, d'une sonde de température, d'un réfrigérant à eau, d'une double enveloppe de chauffage et d'une système d'inertage à l'azote, on introduit 173 g de pivalaldéhyde (environ à 97 %), soit 1,95 moles que l'on refroidit à 10°C sous d'azote. On coule ensuite, en 70 minutes, 153,5 g de tertiobutylamine à 98 % soit 2,06 moles. La coulée terminée, on chauffe pendant 2 heures à 35°C. On vérifie ensuite la conversion totale de l'aldéhyde par CPV. On arrête l'agitation, on observe la décantation d'une phase aqueuse inférieure que l'on soutire du milieu réactionnel.

Ensuite, on additionne, à 20°C, toujours sous atmosphère d'azote, 411 g, (2,91 moles soit un excès molaire de 49 %) de phosphite de diéthyle en 20 minutes. On agite ensuite le milieu réactionnel pendant 20 heures à 40°C. On arrête la réaction lorsque l'on constate que toute l'imine intermédiaire a été consommée.

Ensuite, on procède au traitement du brut réactionnel récupéré. Ce brut est un liquide légèrement jaunâtre.

On acidifie à pH 3 avec une solution d'HCl à 5 % dans l'eau en maintenant le milieu à 10°C. La réaction étant exothermique, on refroidit avec de la glace.

On extrait les impuretés organiques au chlorure de méthylène. On récupère ainsi une phase aqueuse incolore contenant le chlorhydrate de l'aminophosphonate que l'on rebasifie par une solution saturée de $KHCO_3$ jusqu'à pH 7,8.

On procède ensuite à l'extraction de l'aminophosphonate par $CH_2Cl_2$. La phase organique de cette extraction est séchée, puis concentrée à l'évaporateur rotatif. On récupère ainsi 360 g d'un liquide incolore, de pureté supérieure à 99 % en aminophosphonate. Le rendement de la réaction est de 66 % par rapport au pivalaldéhyde introduit.

## EXEMPLE 2

### PREPARATION DU 2,2-DIMETHYL-1-(1,1-DIMETHYLETHYLAMINO)PROPYL PHOSPHONATE DE DIETHYLE AU STADE DEMI-GRAND:

Dans un réacteur verre de 8,4 l équipé comme précédemment, on charge 892 g (10 moles), de pivalaldéhyde. On coule ensuite 751 g (10 moles) de tertiobutylamine en 57 minutes, tout en maintenant la température du milieu réactionnel aux environs de 10°C. Après 2 heures de réaction à 40°C, on arrête l'agitation. Une phase aqueuse décante et est soutirée du réacteur (184 g).

On ajoute ensuite 2133 g (15 moles) de diéthylphosphite en 55 minutes. Le milieu réactionnel est agité à température ambiante pendant 19 heures.

On récupère un brut réactionnel de 3511 g contenant 68 % d'aminophosphonate.

Le brut réactionnel est ensuite purifié par un traitement acido/basique. On obtient 1796 g d'aminophosphonate de pureté > 96 %. Le rendement de la réaction après purification est de 62 %.

## EXEMPLE 3 (NON CONFORME A L'INVENTION)

### OBTENTION DU N-TERTIOBUTYL-1 -DIETHYLPHOSPHONO-2,2-DIMETHYLPROPYL NITROXYDE PAR OXYDATION DU 2,2-DIMETHYL-1-(1,1-DIMETHYLETHYLAMINO)PROPYL PHOSPHONATE DE DIETHYLE (CI-APRES AMINOPHOSPHONATE) PAR L'ACIDE METACHLOROPERBENZOIQUE (mCPBA) :

Dans un réacteur verre de 8,4 l équipé comme dans l'exemple 1, on charge 304 g (1,21 moles) de mCPBA dans 4018 g (3 l) de $CH_2Cl_2$. Après dissolution complète du peracide, on décante une phase aqueuse de 66,3 g. La solution organique de mCPBA est séchée au moyen de tamis moléculaire 4Å. Puis, on ajoute goutte à goutte 225,8 g (0,769 mole) d'aminophosphonate tel qu'obtenu dans l'exemple 1) au milieu réactionnel maintenu à 10°C. Après 2 heures de réaction, on neutralise au moyen d'une solution aqueuse saturée de $KHCO_3$ (1537 g) à température ambiante.

La phase organique orangée est isolée, lavée à l'eau puis concentrée sous pression réduite.

On obtient 207,7 g de N-tertiobutyl-1-diéthylphosphono-2,2-diméthylpropylnitroxyde de pureté égale à 77 %. Le rendement de la réaction par rapport à l'aminophosphonate est de 71 %.

**EXEMPLE 4 (SELON L'INVENTION)**

**OBTENTION DU N-TERTIOBUTYL-1-DIETHYLPHOSPHONO-2,2-DIMETHYLPROPYL NITROXYDE (CI-APRES NITROXYDE) PAR OXYDATION DU 2,2-DIMETHYL-1-(1,1-DIMETHYLETHYLAMINO)PROPYL PHOSPHONATE DE DIETHYLE (CI-APRES AMINOPHOSPHONATE) PAR L'ACIDE PERACETIQUE EN MILIEU BIPHASIQUE :**

On dilue 5 g d'aminophosphonate tel qu'obtenu dans l'exemple 1 dans 300 ml de $CH_2Cl_2$ dans un réacteur muni de deux ampoules de coulées et d'une sonde pHmétrique. On ajoute 60 ml d'eau et on maintient le mélange sous une vive agitation mécanique. Dans une ampoule de coulée, on a préparé 2 équivalents d'acide peracétique à 15 % dans l'acide acétique soit 17,2 g. Dans l'autre, on a préparé 7,8 g de bicarbonate de potassium dissous dans 140 ml d'eau. La coulée des deux réactifs est effectuée de manière à maintenir le pH de la phase aqueuse entre 5 et 7. On observe un dégagement gazeux ($CO_2$). La solution jaunit progressivement et on contrôle. régulièrement le taux d'oxygène actif dans chaque phase. Au bout de 24 h, la phase organique est orange et le dégagement gazeux a cessé totalement. On récupère par décantation la phase organique dont on évapore le solvant. Le nitroxyde brut se présente sous la forme d'une huile orange foncé (4,1 g) dont la pureté est de 89 %. Le rendement global est de 70 %.

**EXEMPLE 5 (SELON L'INVENTION)**

**OBTENTION DU N-TERTIOBUTYL-1-DIETHYLPHOSPHONO-2,2-DIMETHYLPROPYL NITROXYDE (CI-APRES NITROXYDE) PAR OXYDATION DU 2,2-DIMETHYL-1-(1,1-DIMETHYLETHYLAMINO)PROPYL PHOSPHONATE DE DIETHYLE (CI-APRES AMINOPHOSPHONATE) PAR L'ACIDE PERPROPIONIQUE EN MILIEU BIPHASIQUE :**

On dilue 5 g d'aminophosphonate (0,017 mole) tel qu'obtenu selon l'exemple 1 dans 100 ml d'acétate d'éthyle dans un réacteur muni de deux ampoules de coulées, d'une agitation mécanique et d'une sonde pHmétrique. On ajoute 60 ml d'eau et on maintient le mélange sous une vive agitation. Ensuite, on introduit, sous agitation, lentement et simultanément 13,77 g d'acide perpropionique à 20 % en poids (0,0307 mole) dans le propionate d'éthyle et une solution aqueuese à 8,5 % en poids de $K_2CO_3$ (13 g de $K_2CO_3$ dans 140 ml d'eau) de manière à maintenir le pH de la phase aqueuse entre 5 et 7. On observe un dégagement gazeux ($CO_2$). La solution jaunit progressivement et on contrôle régulièrement le taux d'oxygène actif dans chaque phase. Au bout de 16 h, la phase organique est orange et le dégazement gazeux a cessé totalement. On récupère par décantation la phase organique dont on évapore le solvant. Le nitroxyde brut se présente sous la forme d'une huile orange foncé (4,6 g) dont la pureté est égale à 62,5 %. Le rendement en nitroxyde-β-phosphoré est de 54 %.

**EXEMPLE 6 (NON CONFORME A L'INVENTION)**

**OBTENTION DU N-TERTIOBUTYL-1-DIETHYLPHOSPHONO-2,2-DIMETHYLPROPYL NITROXYDE (CI-APRES NITROXYDE) PAR OXYDATION DU 2,2-DIMETHYL-1-(1,1-DIMETHYLETHYLAMINO)PROPYL PHOSPHONATE DE DIETHYLE (CI-APRES AMINOPHOSPHONATE) PAR L'ACIDE PERACETIQUE :**

Dans un ballon de 250 ml, on mélange 8,3 g d'acide péracétique 32 %, 55 g de $CH_2Cl_2$ et 10 g d'aminophosphonate tel qu'obtenu selon l'exemple 1. Ce mélange est maintenu sous agitation pendant 24 heures. On neutralise ensuite la solution à l'aide d'une solution saturée de carbonate de potassium et on récupère la phase organique. Après évaporation du dichlorométhane, on obtient 1,2 g d'un liquide orangé (rendement inférieur à 8,7 %).

**EXEMPLE 7 (SELON L'INVENTION)**

**OBTENTION DU N-TERTIOBUTYL-1-DIETHYLPHOSPHONO-2,2-DIMETHYLPROPYL NITROXYDE (CI-APRES NITROXYDE) PAR OXYDATION DU 2,2-DIMETHYL-1-(1,1-DIMETHYLETHYLAMINO)PROPYL PHOSPHONATE DE DIETHYLE (CI-APRES AMINOPHOSPHONATE) PAR L'ACIDE PERACETIQUE EN MILIEU BIPHASIQUE SANS ISOLEMENT DE L'AMINOPHOSPHONATE :**

Dans un ballon de 1 litre muni d'un agitateur mécanique, de deux ampoules de coulée, d'un réfrigérant, d'une vanne de fond et d'une arrivée d'azote, on introduit 11,18 g de pivalaldéhyde auxquels on ajoute doucement 9,5 g de terbutylamine. Le mélange est laissé 1 h30 sous agitation à 35°C puis refroidi. L'eau formée est décantée et éliminée par la vanne de fond. On ajoute alors 28,1 g de diéthylphosphite et le mélange est laissé sous agitation à 40°C pendant 17 h. Après refroidissement, on ajoute lentement à 0°C, 130 g d'une solution aqueuse à 5 % en poids d'HCl. On lave la solution en entraînant les impuretés avec du $CH_2Cl_2$. La solution aqueuse de chlorhydrate d'aminophosphonate ainsi obtenue est ensuite utilisée telle quelle pour passer au nitroxyde.

On ajoute à cette solution 300 g de $CH_2Cl_2$ et on maintient une vive agitation. On ajoute ensuite lentement, 61 g d'une solution d'acide acétique à 32 % en poids d'acide peracétique et en même temps on coule une solution de carbonate de potassium de manière à ramener et à maintenir le pH entre 5 et 7. Au bout de 4h, la phase organique est orange foncé et on arrête la réaction.

Après extraction et lavage de la phase organique, on évapore le dichlorométhane sous pression réduite ce qui permet d'obtenir 15 g de nitroxyde.

## Revendications

**1.** Procédé de fabrication de composés de formule générale :

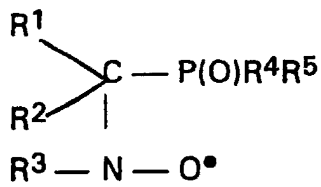

(I)

dans laquelle $R^1$ et $R^2$, identiques ou différents, représentent un atome d'hydrogène, un radical alkyle linéaire, ramifié ou cyclique ayant un nombre d'atomes de carbone allant de 1 à 10, un radical aryle, un radical aralkyle ayant un nombre d'atomes de carbone allant de 1 à 10, ou bien $R^1$ et $R^2$ sont reliés entre eux de façon à former un cycle incluant l'atome de carbone portant lesdits $R^1$ et $R^2$, ledit cycle ayant un nombre d'atomes de carbone, incluant le carbone porteur des radicaux $R^1$ et $R^2$, allant de 3 à 8 ; $R^3$ représente un radical hydrocarboné, linéaire ou ramifié, saturé ou insaturé, pouvant comprendre au moins un cycle, ledit radical ayant un nombre d'atomes de carbone allant de 1 à 30 ; $R^4$ et $R^5$, identiques ou différents, représentent un radical alkyle, linéaire ou ramifié, ayant un nombre d'atomes de carbone allant de 1 à 20, un radical cycloalkyle, aryle, alkoxyle, aryloxyle, aralkyloxyle, perfluoroalkyle, aralkyle, dialkyl- ou diarylamino, alkylarylamino, thioalkyle, ou bien $R^4$ et $R^5$ sont reliés entre eux de façon à former un cycle incluant l'atome de phosphore, ledit hétérocycle ayant un nombre d'atomes de carbone allant de 2 à 4 et peut contenir en outre 1 ou plusieurs atomes d'oxygène, de soufre ou d'azote ; ledit procédé consistant à oxyder un aminophoshonate de formule

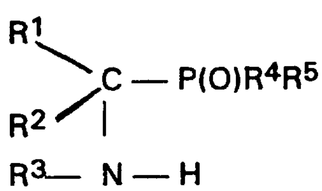

(II)

obtenu par réaction d'un composé carbonylé $R^1R^2C(O)$, d'une amine primaire $R^3NH_2$ et d'un composé phosphoré $HP(O)R^4R^5$, $R^1$, $R^2$, $R^3$, $R^4$ et $R^5$ ayant les significations précédemment données ; ledit procédé étant **caractérisé en ce qu'**il consiste d'abord à préparer et éventuellement à isoler le composé II, puis ensuite à l'oxyder en effectuant les étapes (successives) suivantes :

a) on fait réagir un composé carbonylé $R^1R^2C(O)$ avec une amine primaire $R^3NH_2$ selon un rapport molaire $R^1R^2C(O)$ / $R^3NH_2$ compris entre 0,8 et 1,5, à une température comprise entre 0°C et 120°C, à une pression allant de 1 à 10 bars ; puis on élimine l'eau formée du milieu réactionnel ;
b) on fait réagir le composé obtenu en a) avec un composé phosphoré $HP(O)R^4R^5$ utilisé selon un rapport molaire $HP(O)R^4R^5$ / composé a) au plus égal à 1,5, à une température comprise entre 0°G et 120°C ;
c) on effectue un traitement acide du milieu réactionnel obtenu en b), on ajoute ensuite un solvant organique, on décante, on récupère la phase aqueuse puis on effectue un traitement basique de ladite phase aqueuse ;
d) on extrait l'aminophosphonate au moyen d'un solvant organique identique à celui utilisé précédemment en c) ;
e) puis, on élimine totalement ledit solvant, et on isole ledit aminophosphonate (II) qui est oxydé en nitroxyde-β-phosphoré selon les étapes suivantes :

$a^1$/ on solubilise l'aminophosphonate (II) obtenu en e) avec un solvant organique non miscible à l'eau puis ; $b^1$/ ensuite, on ajoute simultanément et sous forte agitation au milieu ainsi obtenu, une quantité de peracide organique non halogéné selon un rapport molaire peracide/aminophosphonate (II) allant de 1,5 à 2,5 et une quantité suffisante d'une solution aqueuse basique d'un carbonate 'ou d'un hydrogénocarbonate d'un métal alcalin ou d'un métal alcalinoterreux ou bien encore d'une solution ammoniacale pour obtenir un pH allant de 5 à 12, à une température comprise entre -10°C et +40°C, jusqu'à conversion complète de l'aminophosphonate (II) ;
$c^1$/ puis on récupère la phase organique par simple décantation, et on isole le nitroxyde β-phosphoré par évaporation du solvant organique sous pression réduite.

2. Procédé selon la revendication 1, **caractérisé en ce que**, après avoir dans l'étape c) récupéré la phase aqueuse décantée à laquelle on a ajouté un solvant organique non miscible à l'eau, l'on effectue les étapes $b^1$/ et $c^1$/.

3. Procédé selon la revendication 1 ou 2, **caractérisé en ce que** le rapport molaire $R^1R^2C(O)$ / $R^3NH_2$ est compris entre 0,9 et 1,1.

4. Procédé selon la revendication 1 ou 2, **caractérisé en ce que** le rapport molaire $HP(O)R^4R^5$ / composé obtenu dans l'étape a) est compris entre 1 et 1,5.

5. Procédé selon la revendication 1 ou 2, **caractérisé en ce que** la température de l'étape d'oxydation $b^1$/ est comprise entre -10°C et +30°C.

6. Procédé selon la revendication 1 ou 2, **caractérisé en ce que** la température de réaction entre le composé carbonylé $R^1R^2C(O)$ et l'amine primaire $R^3NH_2$ est comprise entre 0°C et 60°C.

7. Procédé selon la revendication 1 ou 2, **caractérisé en ce que** la température de réaction entre le composé phosphoré $HP(O)R^4R^5$ et le composé formé dans l'étape a) (imine III) est comprise entre 10°C et 80°C.

8. Procédé selon l'une quelconque des revendications 1 à 7, **caractérisé en ce que** le solvant organique est le chlorure de méthylène.

9. Procédé selon la revendication 1 ou 2, **caractérisé en ce que** le solvant organique utilisé dans les étapes $a^1$/ à $c^1$/ est l'acétate d'éthyle.

10. Procédé selon la revendication 1 ou 2, **caractérisé en ce que** l'amine $R^3NH_2$ est la tertiobutylamine, l'isopropylamine, la diphénylméthylamine, la 1-phényféthylamine ou la cyclohexylamine.

11. Procédé selon la revendication 10, **caractérisé en ce que** l'amine $R^3NH_2$ est la tertiobutylamine.

12. Procédé selon la revendication 1 ou 2, **caractérisé en ce que** le dérivé phosphoré $HP(O)R^4R^5$ est te phosphite de diméthyle, le phosphite de diéthyle, le phosphite de n-propyle, le phosphite de diisopropyle ou le phosphite de dibenzyle.

13. Procédé selon la revendication 12, **caractérisé en ce que** le dérivé phosphoré $HP(O)R^4R^5$ est le phosphite de diéthyle.

14. Procédé selon la revendication 1 ou 2, **caractérisé en ce que** le composé carbonylé $R^1R^2C(O)$ est le pivalaldéhyde, l'isobutyraldéhyde, le cyclohexanecarboxaldéhyde ou la cyclohexanone.

15. Procédé selon la revendication 14, **caractérisé en ce que** le composé carbonylé $R^1R^2C(O)$ est le pivalaldéhyde.

16. Procédé selon la revendication 1 ou 2, **caractérisé en ce que** le peracide organique non halogéné est l'acide peracétique ou l'acide perpropionique.

## Patentansprüche

1. Verfahren zur Herstellung von Verbindungen der allgemeinen Formel:

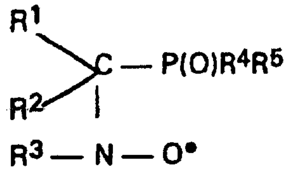

(I)

worin $R^1$ und $R^2$ gleich oder verschieden sind und für ein Wasserstoffatom, einen linearen, verzweigten oder cyclischen Alkylrest mit 1 bis 10 Kohlenstoffatomen, einen Arylrest oder einen Aralkylrest mit 1 bis 10 Kohlenstoffatomen stehen oder auch so miteinander verbunden sind, daß sie mit dem die Reste $R^1$ und $R^2$ tragenden Kohlenstoffatom einen Ring bilden, der einschließlich des die Reste $R^1$ und $R^2$ tragenden Kohlenstoffatoms 3 bis 8 Kohlenstoffatome aufweist; $R^3$ für einen linearen oder verzweigten, gesättigten oder ungesättigten, gegebenenfalls mindestens einen Ring enthaltenden Kohlenwasserstoffrest mit 1 bis 30 Kohlenstoffatomen steht; $R^4$ und $R^5$ gleich oder verschieden sind und für einen linearen oder verzweigten Alkylrest mit 1 bis 20 Kohlenstoffatomen, einen Cycloalkyl-, Aryl-, Alkoxy-, Aryloxy-, Aralkyloxy-, Perfluoralkyl-, Aralkyl-, Dialkyl- oder Diarylamino-, Alkylarylamino- oder Thioalkylrest stehen oder auch so miteinander verbunden sind, daß sie mit dem Phosphoratom einen Ring bilden, der 2 bis 4 Kohlenstoffatome aufweist und außerdem ein oder mehrere Sauerstoff-, Schwefel- oder Stickstoffatome enthalten kann;
bei dem man ein durch Umsetzung einer Carbonylverbindung $R^1R^2C(O)$ mit einem primären Amin $R^3NH_2$ und einer Phosphorverbindung $HP(O)R^4R^5$, worin $R^1$, $R^2$, $R^3$, $R^4$ und $R^5$ die oben angegebenen Bedeutungen haben, erhältliches Aminophosphonat der Formel

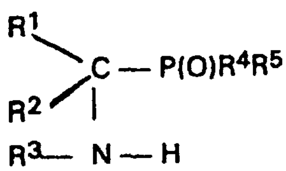

(II)

oxidiert, **dadurch gekennzeichnet, daß** man die Verbindung II zunächst herstellt und gegebenenfalls isoliert und dann oxidiert, indem man die folgenden (aufeinanderfolgenden) Schritte durchführt:

a) Umsetzung einer Carbonylverbindung $R^1R^2C(O)$ mit einem primären Amin $R^3NH_2$ in einem Molverhältnis von $R^1R^2C(O)$ zu $R^3NH_2$ zwischen 0,8 und 1,5 bei einer Temperatur zwischen 0°C und 120°C und einem Druck von 1 bis 10 bar und anschließende Entfernung des gebildeten Wassers aus dem Reaktionsmedium;

b) Umsetzung der in a) erhaltenen Verbindung mit einer Phosphorverbindung $HP(O)R^4R^5$ in einem Molverhältnis von $HP(O)R^4R^5$ zu Verbindung a) von höchstens 1,5 bei einer Temperatur zwischen 0°C und 120°C;

c) Behandlung des in b) erhaltenen Reaktionsmediums mit einer Säure, anschließende Zugabe eines organischen Lösungsmittels, Absetzenlassen, Rückgewinnung der wäßrigen Phase und Behandlung der wäßrigen Phase mit einer Base;

d) Extraktion des Aminophosphonats mit dem gleichen organischen Lösungsmittel, das oben in c) verwendet wurde,

e) vollständige Entfernung des Lösungsmittels und Isolierung des Aminophosphonats (II), welches gemäß den folgenden Schritten zum β-Phosphornitroxid oxidiert wird, indem man:

a¹) das in e) erhaltene Aminophosphonat (II) in einem nicht wassermischbaren organischen Lösungsmittel löst;

b¹) das so erhaltene Medium unter kräftigem Rühren bei einer Temperatur zwischen -10°C und +40°C gleichzeitig mit einer Menge an nichthalogenierter organischer Persäure in einem Molverhältnis von Persäure zu Aminophosphonat (II) von 1,5 bis 2,5 und einer so großen Menge einer basischen wäßrigen

Lösung eines Alkalimetall- oder Erdalkalimetallcarbonats oder -hydrogencarbonats oder einer Ammoniaklösung, daß man einen pH-Wert von 5 bis 12 erhält, versetzt, bis das Aminophosphonat (II) vollständig umgewandelt ist;

$c^1$) die organische Phase durch einfaches Absetzenlassen zurückgewinnt und das β-Phosphornitroxid durch Abziehen des organischen Lösungsmittels unter vermindertem Druck isoliert.

2. Verfahren nach Anspruch 1, **dadurch gekennzeichnet, daß** man nach Rückgewinnung der mit einem nicht wassermischbaren organischen Lösungsmittel versetzten, absetzen gelassenen wäßrigen Phase in Schritt c) die Schritte $b^1$) und $c^1$) durchführt.

3. Verfahren nach Anspruch 1 oder 2, **dadurch gekennzeichnet, daß** das Molverhältnis von $R^1R^2C(O)$ zu $R^3NH_2$ zwischen 0,9 und 1,1 liegt.

4. Verfahren nach Anspruch 1 oder 2, **dadurch gekennzeichnet, daß** das Molverhältnis von $HP(O)R^4R^5$ zu der in Schritt a) erhaltenen Verbindung zwischen 1 und 1,5 liegt.

5. Verfahren nach Anspruch 1 oder 2, **dadurch gekennzeichnet, daß** die Temperatur im Oxidationsschritt $b^1$) zwischen -10°C und +30°C liegt.

6. Verfahren nach Anspruch 1 oder 2, **dadurch gekennzeichnet, daß** man die Umsetzung zwischen der Carbonylverbindung $R^1R^2C(O)$ und dem primären Amin $R^3NH_2$ bei einer Temperatur zwischen 0°C und 60°C durchführt.

7. Verfahren nach Anspruch 1 oder 2, **dadurch gekennzeichnet, daß** man die Umsetzung zwischen der Phosphorverbindung $HP(O)R^4R^5$ und der in Schritt a) erhaltenen Verbindung (Imin III) bei einer Temperatur zwischen 10°C und 80°C durchführt.

8. Verfahren nach einem der Ansprüche 1 bis 7,
**dadurch gekennzeichnet, daß** man als organisches Lösungsmittel Methylenchlorid verwendet.

9. Verfahren nach Anspruch 1 oder 2, **dadurch gekennzeichnet, daß** man in den Schritten $a^1$ bis $c^1$ als organisches Lösungsmittel Essigsäureethylester verwendet.

10. Verfahren nach Anspruch 1 oder 2, **dadurch gekennzeichnet, daß** man als Amin $R^3NH_2$ tert.-Butylamin, Isopropylamin, Diphenylmethylamin, 1-Phenylethylamin oder Cyclohexylamin verwendet.

11. Verfahren nach Anspruch 10, **dadurch gekennzeichnet, daß** man als Amin $R^3NH_2$ tert.-Butylamin verwendet.

12. Verfahren nach Anspruch 1 oder 2, **dadurch gekennzeichnet, daß** man als Phosphorderivat $HP(O)R^4R^5$ Dimethylphosphit, Diethylphosphit, n-Propylphosphit, Diisopropylphosphit oder Dibenzylphosphit verwendet.

13. Verfahren nach Anspruch 12, **dadurch gekennzeichnet, daß** man als Phosphorderivat $HP(O)R^4R^5$ Diethylphosphit verwendet.

14. Verfahren nach Anspruch 1 oder 2, **dadurch gekennzeichnet, daß** man als Carbonylverbindung $R^1R^2C(O)$ Pivalaldehyd, Isobutyraldehyd, Cyclohexancarboxaldehyd oder Cyclohexanon verwendet.

15. Verfahren nach Anspruch 14, **dadurch gekennzeichnet, daß** man als Carbonylverbindung $R^1R^2C(O)$ Pivalaldehyd verwendet.

16. Verfahren nach Anspruch 1 oder 2, **dadurch gekennzeichnet, daß** man als nichthalogenierte organische Persäure Peressigsäure oder Perpropionsäure verwendet.

## Claims

1. A process for the manufacture of compounds of general formula:

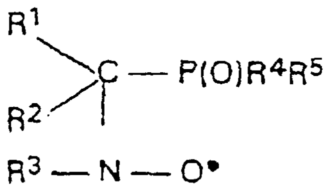

(I)

in which $R^1$ and $R^2$, which are identical or different, represent a hydrogen atom, a linear, branched or cyclic alkyl radical having a number of carbon atoms ranging from 1 to 10, an aryl radical, or an aralkyl radical having a number of carbon atoms ranging from 1 to 10, or else $R^1$ and $R^2$ are connected to one another so as to form a ring which includes the carbon atom carrying said $R^1$ and $R^2$ [lacuna], said ring having a number of carbon atoms, including the carbon carrying the $R^1$ and $R^2$ radicals, ranging from 3 to 8; $R^3$ represents a linear or branched and saturated or unsaturated hydrocarbonaceous radical which can comprise at least one ring, said radical having a number of carbon atoms ranging from 1 to 30; and $R^4$ and $R^5$, which are identical or different, represent a linear or branched alkyl radical having a number of carbon atoms ranging from 1 to 20 or a cycloalkyl, aryl, alkoxyl, aryloxyl, aralkyloxyl, perfluoroalkyl, aralkyl, dialkyl- or diarylamino, alkylarylamino or thioalkyl radical, or else $R^4$ and $R^5$ are connected to one another so as to form a ring which includes the phosphorus atom, said heterocycle having a number of carbon atoms ranging from 2 to 4 and being able in addition to comprise one or more oxygen, sulfur or nitrogen atoms;
said process consisting in oxidizing an aminophosphonate of formula

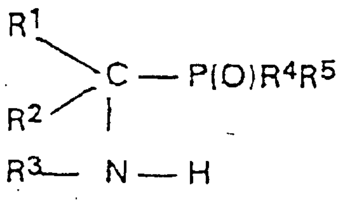

(II)

obtained by reaction of a carbonyl compound $R^1R^2C(O)$, of a primary amine $R^3NH_2$ and of a phosphorus compound $HP(O)R^4R^5$, $R^1$, $R^2$, $R^3$, $R^4$ and $R^5$ having the meanings given above; said process being **characterized in that** it consists first in preparing and optionally in isolating the compound II and then subsequently in oxidizing it by carrying out the following (successive) stages:

a) a carbonyl compound $R^1R^2C(O)$ is reacted with a primary amine $R^3NH_2$ according to an $R^1R^2C(O)/R^3NH_2$ molar ratio of between 0.8 and 1.5 at a temperature of between 0°C and 120°C and a pressure ranging from 1 to 10 bar; then the water formed is removed from the reaction medium;
b) the compound obtained in a) is reacted with a phosphorus compound $HP(O)R^4R^5$ used according to an HP (O)$R^4R^5$/compound a) molar ratio at most equal to 1.5 at a temperature of between 0°C and 120°C;
c) an acidic treatment of the reaction medium obtained in b) is carried out, an organic solvent is subsequently added, separation by settling is carried out, the aqueous phase is recovered and then a basic treatment of said aqueous phase is carried out;
d) the aminophosphonate is extracted by means of an organic solvent identical to that used previously in c);
e) said solvent is then completely removed and said aminophosphonate (II) is isolated and is oxidized to β-phosphorated nitroxide according to the following stages:

a[1]) the aminophosphonate (II) obtained in e) is dissolved in a water-immiscible organic solvent, then;
b[1]) subsequently, an amount of nonhalogenated organic peracid, according to a peracid/aminophosphonate (II) molar ratio ranging from 1.5 to 2.5, and a sufficient amount of a basic aqueous solution of an alkali metal carbonate or hydrogencarbonate or of an alkaline earth metal carbonate or hydrogencarbonate or alternatively of an ammonia solution to produce a pH ranging from 5 to 12 are simultaneously added with vigorous stirring, at a temperature of between -10°C and +40°C, to the medium thus obtained, until the aminophosphonate (II) has been completely converted;

c[1]) the organic phase is then recovered by simple separation by settling and the β-phosphorated nitroxide is isolated by evaporation of the organic solvent under reduced pressure..

**2.** The process as claimed in claim 1, **characterized in that**, after having, in stage c), recovered the aqueous phase which was separated by settling, to which a water-immiscible organic solvent has been added, stages $b^1$) and $c^1$) are carried out.

**3.** The process as claimed in claim 1 or 2, **characterized in that** the $R^1R^2C(O)/R^3NH_2$ molar ratio is between 0.8 and 1.5.

**4.** The process as claimed in claim 1 or 2, **characterized in that** the $HP(O)R^4R^5$/compound obtained in stage a) molar ratio is between 1 and 1.5.

**5.** The process as claimed in claim 1 or 2, **characterized in that** the temperature of the oxidation stage $b^1$) is between -10°C and +40°C.

**6.** The process as claimed in claim 1 or 2, **characterized in that** the temperature of the reaction between the carbonyl compound $R^1R^2C(O)$ and the primary amine $R^3NH_2$ is between 0°C and 60°C.

**7.** The process as claimed in claim 1 or 2, **characterized in that** the temperature of the reaction between the phosphorus compound $HP(O)R^4R^5$ and the compound formed in stage a) (imine III) is between 10°C and 80°C.

**8.** The process as claimed in any one of claims 1 to 7, **characterized in that** the organic solvent is methylene chloride.

**9.** The process as claimed in claim 1 or 2, **characterized in that** the organic solvent used in stages $a^1$) to $c^1$) is ethyl acetate.

**10.** The process as claimed in claim 1 or 2, **characterized in that** the amine $R^3NH_2$ is tert-butylamine, isopropylamine, diphenylmethylamine, 1-phenylethylamine or cyclohexylamine.

**11.** The process as claimed in claim 10, **characterized in that** the amine $R^3NH_2$ is tert-butylamine.

**12.** The process as claimed in claim 1 or 2, **characterized in that** the phosphorus derivative $HP(O)R^4R^5$ is dimethyl phosphite, diethyl phosphite, n-propyl phosphite, diisopropyl phosphite or dibenzyl phosphite.

**13.** The process as claimed in claim 12, **characterized in that** the phosphorus derivative $HP(O)R^4R^5$ is diethyl phosphite.

**14.** The process as claimed in claim 1 or 2, **characterized in that** the carbonyl compound $R^1R^2C(O)$ is pivalaldehyde, isobutyraldehyde, cyclohexanecarboxaldehyde or cyclohexanone.

**15.** The process as claimed in claim 14, **characterized in that** the carbonyl compound $R^1R^2C(O)$ is pivalaldehyde.

**16.** The process as claimed in claim 1 or 2, **characterized in that** the nonhalogenated organic peracid is peracetic acid or perpropionic acid.